# EUROPÄISCHE PATENTSCHRIFT

(11) **EP 1 095 725 B1**
(45) Veröffentlichungstag und Bekanntmachung des Hinweises auf die Patenterteilung: **04.01.2006**
(21) Anmeldenummer: 99120923.0
(22) Anmeldetag: 29.10.1999
(51) Int. Cl.: B23H 1/08, H01B 3/22

(54) **Dielektrische Flüssigkeit für die Metallbearbeitung mittels Funkenerosion**
Dielectric fluid for electroerosion machining
Fluide diélectrique pour usinage par électroérosion

(43) Veröffentlichungstag der Anmeldung: 02.05.2001
(73) Patentinhaber: oelheld GmbH, 70188 Stuttgart (DE)
(72) Erfinder: Storr, Manfred, 70619Stuttgart (DE); Rehbein, Wilhelm, 70435 Stuttgart (DE)
(74) Vertreter: Patentanwälte Ruff, Wilhelm, Beier, Dauster & Partner

(56) Entgegenhaltungen:
- EP-A- 0 896 050
- US-A- 3 639 275
- US-A- 5 773 782
- PATENT ABSTRACTS OF JAPAN vol. 017, no. 312 (M-1429), 15. Juni 1993 (1993-06-15) -& JP 05 031626 A (SODICK CO LTD), 9. Februar 1993 (1993-02-09)

## Beschreibung

Die Erfindung betrifft die Verwendung einer Flüssigkeit, die als Hauptkomponente gesättigte aliphatische, acyclische Kohlenwasserstoffe mit einem Anteil an aromatischen Kohlenwasserstoffen kleiner als ein Gewichtsprozent enthält und der als Additiv organische Schwefelverbindungen in einer Konzentration von mindestens 0,01 Gewichtsprozent und maximal 10 Gewichtsprozent beigegeben sind, in welchen mindestens zwei Schwefelatome in Molekül miteinander verbunden sind, die im Molekül entweder keine Ladung oder eine negative Partialladung aufweisen, als Dielektrikum für die Metallbearbeitung mittels Funkenerosion.

Eine solche dielektrische Flüssigkeit ist aus der DE 41 32 879 C2 bekannt. Bekannt ist auch, daß beim Funkenerosionsverfahren eine abtragende Bearbeitung eines Werkstückes durch Funkenentladungen erfolgt, die zwischen einer Arbeitselektrode und dem als andere Elektrode fungierenden Werkstück stattfinden. Zwischen den Elektroden befindet sich dabei die dielektrische Flüssigkeit, welche die Elektroden so voneinander isoliert, daß der elektrische Durchschlag erst bei geringstmöglichen Abständen erfolgt. Das Dielektrikum soll außerdem möglichst schnell den Aufbau eines Funkens ermöglichen, den Funkenentladekanal während der Entladung zur Erzielung einer hohen Energiedichte möglichst einschnüren und den Entladekanal nach Abbruch des Funkens schnell entionisieren. Die dielektrische Flüssigkeit dient außerdem zur Kühlung der Arbeitselektrode und des Werkstücks sowie zum Abtransport der vom Werkstück und verschleißbedingt von der Arbeitselektrode abgetragenen Schmutzpartikel. Die unterschiedlichen an eine dielektrische Flüssigkeit zu stellenden Anforderungen sind in dem Prospekt "Wissenswertes zur Senkerosion" der Firma Oel-Held, Ausgabe März 1990 beschrieben. Dort sind, ebenso wie in der DE 41 32 879 C2, auch Ausführungen über die Arbeitsweise bei der Funkenentladung und darüber enthalten, welche Vorund Nachteile hinsichtlich der erzielbaren Abtragsleistung entstehen.

In der JP-A-05031626 ist eine dielektrische Flüssigkeit für die Funkenerosion mit schwefelhaltigen Additiven offenbart. Als Additive werden schwefelhaltige Zich-Organyle und auch Schwefelverbindungen mit aromatischen Resten beschrieben.

Aus der US-PS 3 639 275 ist eine dielektrische Flüssigkeit für Funkenerosionsmaschinen bekannt, die aus einem hauptsächlich aliphatischen Leichtöl niedriger Viskosität mit geringen Anteilen öllöslicher Metallsulfonate und phenolischer Antioxidantien besteht, deren Phenylreste auch durch Schwefelatome verbunden sein können. Die in den Sulfonaten enthaltenen Schwefelatome weisen dabei hohe Oxidationsstufen auf, und die phenolischen Antioxidantien enthalten aromatische Kohlenwasserstoffgruppen. Es hat sich gezeigt, daß der Zusatz solcher Phenolverbindungen unter arbeitsmedizinischen Gesichtspunkten problematisch ist.

Zur Verbesserung der Eigenschaften eines Dielektrikums hat man in der US-PS 3 648 013 eine dielektrische Flüssigkeit vorgesehen, die überwiegend aus Kohlenwasserstoffen, oxidierten Kohlenwasserstoffen, z.B. Ester, Ether, Alkohole oder Lactone oder Ölen auf Silikonbasis oder eine Mischung dieser Stoffe besteht. Als Zusätze zur Erhöhung der elektrischen Leitfähigkeit werden neben dem Chromsalz einer Alkylsalicylsäure Erdalkalisalze einer Dialkylsulfonsäure genannt. Das in diesem Dialkylsulfonsäuresalz enthaltene Schwefelatom liegt in einer hohen Oxidationsstufe vor. Bei dem Chromsalz handelt es sich um eine aromatische Verbindung mit einem toxisch wirkenden Schwermetall, so daß die Verwendung solcher Flüssigkeit aus arbeitsmedizinischen Gesichtspunkten problematisch ist.

Aus der EP 0 896 050 ist ein Schweröl bekannt, des durch ein Additiv vor oxidativen Prozessen geschützt werden soll. Es handelt sich dabei um eine Mineralölzusammensetzung, der als Additiv ebenfalls organische Schwefelverbindungen zugesetzt sind.

Die EP 0 261 546 schließlich beschreibt eine dielektrische Flüssigkeit, die aus einer Emulsion von Mineralöl, synthetischem Kohlenwasserstoff, Carbonsäureestern, Phosphatestern, Polyphenylethern oder Silikonöl in Wasser besteht. Als Emulgatoren bzw. oberflächenaktive Additive werden unter anderem Sulfonate, z.B. Alkylsulfonate, Sulfosuccinate, Estersulfonate und Alkylaryl- und Alkylnaphtalinsulfonate, Salze sulfatierter Ester, z.B. sulfatierte Öle, sulfatierte Ester, Alkylsulfate, Ethersulfate, Alkylarylethersulfate und Amidosulfate sowie Sulfobetaine und Alkylthiopolyoloxyethylenether genannt. Die dort genannten Schwefelverbindungen werden, ebenso wie in den vorgenannten dielektrischen Flüssigkeiten, lediglich als Emulgatoren zur Herstellung der Öl- in Wasser-Emulsion verwendet. Das jeweils in den Schwefelverbindungen enthaltene Schwefelatom liegt ebenfalls in einer hohen Oxidationsstufe vor.

Der vorliegenden Erfindung liegt die Aufgabe zugrunde, eine dielektrische Flüssigkeit der eingangs genannten Art zur Verwendung bei einem Funkenerosionsverfahren bereitzustellen; durch deren Einsatz ein bestmöglicher Verfahrensablauf erreicht wird. Unter arbeitsmedizinischen Gesichtspunkten soll die Flüssigkeit unbedenklich einsetzbar sein.

Diese Aufgabe wird gelöst durch die Verwendung einer Flüssigkeit der eingangs genannten Art, die als Hauptkomponente gesättigte aliphatische, acyclische Kohlenwasserstoffe mit einem Anteil an aromatischen Kohlenwasserstoffen Kleiner als ein Gewichtsprozent enthält und der als Additiv organische Schwefelverbindungen in einer Konzentration von mindestens 0,01 Gew.% und maximal 10 Gew.% beigegeben sind, wobei in dieser organischen Schwefelverbindung mindestens zwei Schwefelatome im Molekül miteinander verbunden sind, die im Molekül entweder keine Ladung oder eine negative Partialladung aufweisen, als Dielektrikum für die Metallbearbeitung mittels Funkenerosion, wobei die organischen Schwefelverbindungen keine cyclischen Kohlenwasserstoffreste mit konjugiertes Doppelbindungen enthalten.

Durch die Verwendung einer dielektrischen Flüssigkeit dieser Ausgestaltung wird bei der Metallbearbeitung durch Funkenerosion eine gegenüber bekannten dielektrischen Flüssigkeiten erhebliche Abtragssteigerung bei minimalem Elektrodenverschleiß erreicht. Dies konnte in einer Reihe von Versuchen nachgewiesen werden, auf die später noch eingegangen wird.

In Weiterbildung der Erfindung hat es sich als vorteilhaft erwiesen,
1. daß die organischen Schwefelverbindungen aufgebaut sind aus zwei oder mehr verzweigten oder unverzweigten Ketten von Kohlenwasserstoffen oder Carbonsäureestern, welche durch eine oder mehrere unverzweigte Ketten von 2 bis 10, bevorzugt 2 bis 5 Schwefelatomen miteinander verbunden sind. Dabei können alle durch Schwefelatome verbundenen Ketten sämtlich aus aliphatischen, verzweigten oder unverzweigten oder cyklischenen Kohlenwasserstoffen entsprechend 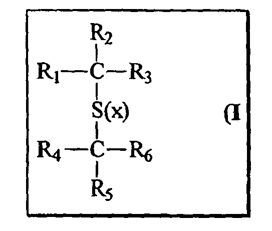 bestehen.
2. Es ist aber auch möglich, alle durch Schwefelatome verbundenen Ketten aus Carbonsäureestern (d.h. Kondensationsprodukten aus einer oder mehreren ein- oder mehrwertigen.Carbonsäuren mit einem oder mehreren ein- oder mehrwertigen Alkoholen) mit der folgenden Struktur aufzubauen: 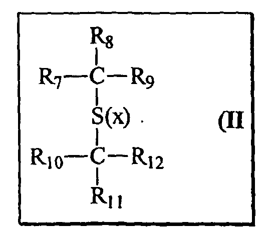
3. Möglich ist es aber auch, alle durch Schwefelatome verbundene Ketten teilweise aus den vorher genannten Kohlenwasserstoffen und aus den vorher genannten Carbonsäureestern sowie Carbonsäuren wie folgt aufzubauen:

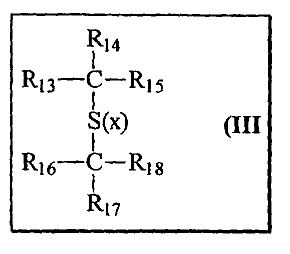

In den nach Punkt 1 aufgebauten Ketten können dabei R₁ und R₄ Alkylgruppen repräsentieren, welche geradkettig oder verzweigt sein können und 1 bis 16 Kohlenstoffatome enthalten. Die in den Ketten nach Anspruch 3 enthaltenen Bestandteile R₂, R₃, R₅ und R₆ können durch Wasserstoffatome oder Alkylgruppen gebildet sein, die geradkettig oder verzweigt sein können und ein bis achtzehn Kohlenstoffatome enthalten. Dabei beträgt bei den vorstehend genannten Lösungen die Anzahl der Schwefelatome je Kette x = 2 - 10, bevorzugt 2 - 5 Atome.

Bei den in den dielektrischen Flüssigkeiten nach Punkt 2 enthaltenen Schwefelverbindungen repräsentieren die Bestandteile R₇ und R₁₀ Carbonsäureestergruppen, welche zusammengesetzt sein können aus einer oder mehreren ein- oder mehrwertigen Carbonsäuren, enthaltend 2 bis 20 Kohlenstoffatome, kondensiert mit einem oder mehreren ein- oder mehrwertigen Alkoholen.

Die Bestandteile R₈, R₉, R₁₁ und R₁₂ repräsentieren Wasserstoffatome oder Alkylgruppen, welche geradkettig oder verzweigt sein können und ein bis sechzehn Kohlenstoffatome enthalten oder ebenfalls Carbonsäureestergruppen. Dabei beträgt bei den vorgenannten Schwefelverbindungen die Anzahl der Schwefelatome je Kette x = 2 - 10, bevorzugt aber 2 - 5 Atome.

Bei den in Punkt 3 in den dielektrischen Flüssigkeiten enthaltenen Schwefelverbindungen repräsentiert der Bestandteil R₁₃ eine Alkylgruppe, welche geradkettig oder verzweigt sein kann und ein bis sechzehn Kohlenstoffatome enthält. Der Bestandteil R₁₆ repräsentiert eine Carbonsäureestergruppe, welche zusammengesetzt sein kann aus einer oder mehreren ein- oder mehrwertigen Carbonsäuren enthaltend zwei bis 20 Kohlenstoffatome kondensiert mit einem oder mehreren ein- oder mehrwertigen Alkoholen. Die Bestandteile R₁₄ und R₁₅ bei der Zusammensetzung nach Anspruch 5 repräsentieren zweckmäßig Wasserstoffatome oder Alkylgruppen, welche geradkettig oder verzweigt sein können und ein bis sechzehn Kohlenstoffatome enthalten oder Carbonsäuren, welche geradkettig oder verzweigt sein können und zwei bis zwanzig Kohlenstoffatome enthalten.

Die Bestandteile R₁₇ und R₁₈ repräsentieren Wasserstoffatome oder Alkylgruppen, die, ebenso wie die anderen Reste (R-Bestandteile), die vorher erwähnt worden sind, identisch oder unterschiedlich sein können. Wasserstoffatome oder Alkylgruppen, welche geradkettig oder verzweigt sein können und ein bis sechzehn Kohlenstoffatome enthalten oder ebenfalls Carbonsäureestergruppen, welche zusammengesetzt sein können aus einer oder mehreren ein- oder mehrwertigen Carbonsäuren enthalten zwei bis zwanzig Kohlenstoffatome kondensiert mit einem oder mehreren ein- oder mehrwertigen Alkoholen oder Carbonsäuren, welche geradkettig oder verzweigt sein können und zwei bis zwanzig Kohlenstoffatome enthalten. Auch hier beträgt die Anzahl der Schwefelatome je Kette x = 2 - 10, bevorzugt 2 - 5 Atome.

In Ausgestaltung der Erfindung kann die dielektrische Flüssigkeit zusätzlich noch ein zweites Additiv aus der Gruppe der Anthrachinon-Derivate enthalten, so daß insoweit auch ein Teil der Eigenschaften der dielektrischen Flüssigkeit nach der DE 41 32 879 C2 übernommen wird. Es hat sich gezeigt, daß die Verwendung der dielektrischen Flüssigkeit nach der Erfindung - auch ohne die Anthrachinon-Derivate - eine bedeutende Leistungssteigerung bei der Funkenerosion erlaubt. Die Flüssigkeit läßt sich aber auch bei der spangebenden Metallbearbeitung mit geometrisch nicht definierten Schneiden vorteilhaft einsetzen. Die Flüssigkeit kann daher auch bei Maschinen verwendet werden, die im selben Arbeitsraum nacheinander die Prozesse der Funkenerosion und des Schleifens durchführen. Für beide Arbeitsgänge kann dieselbe Arbeitsflüssigkeit verwendet werden. Dies ist insofern überraschend, weil herkömmliche Additive für die Zerspanung entweder bei der Funkenerosion nicht wirksam sind oder sich unter den im Funkenspalt herrschenden Bedingungen zersetzen. Andererseits sind die bekannten Additive für die Funkenerosion, wie beispielsweise jenes in der DE 41 32 879 C2 beschriebene Additiv, nicht bei der Zerspanung wirksam.

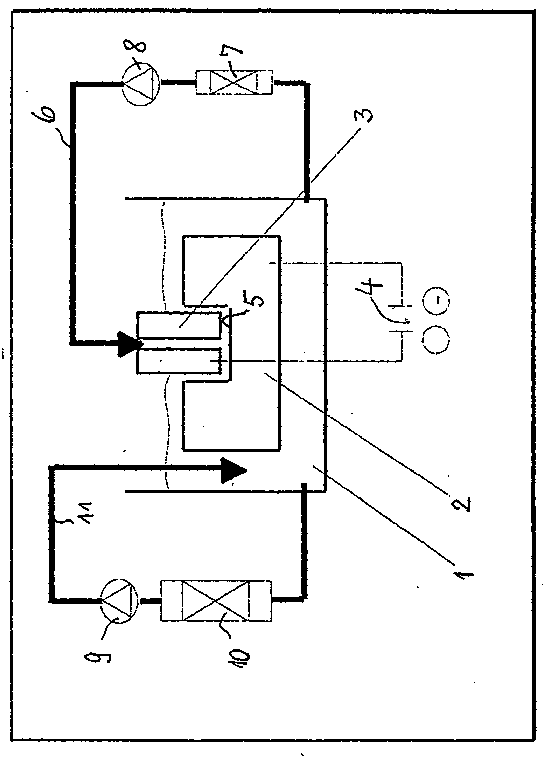

Die Erfindung wird anhand von durchgeführten Versuchen nun im einzelnen hinsichtlich ihrer Wirksamkeit beschrieben. Die Versuchsdurchführung erfolgt dabei jeweils mit einer Versuchserodieranlage, die in der Zeichnung schematisch dargestellt ist.

Bei dieser Versuchserodieranlage ist ein Arbeitsbehälter 1 mit einer Ausführungsform des beschriebenen Dielektrikums gefüllt. In den Behälter und in die Flüssigkeit ist ein Werkstück 2 eingetaucht gehalten, dem eine Werkzeugelektrode 3 zugeordnet ist. Die Werkzeugelektrode 3 und das Werkstück 2 liegen jeweils an einer Hochspannungsquelle 4 an, so daß durch die Funkenentladung im Werkstück 2 beispielsweise die schematisch dargestellte Vertiefung 5 herausgearbeitet werden kann.

Die Werkzeugelektrode 3 ist mit einer Bohrung versehen, durch die eine Kühlung und Spülung mit Hilfe der dielektrischen Flüssigkeit im Behälter erfolgen kann, die durch eine Leitung 6 über einen Filter 7 und eine Pumpe 8 der Werkzeugelektrode 3 zugeführt wird. Die dielektrische Flüssigkeit im Behälter 1 wird außerdem über eine Pumpe 9 und einen Filter 10 und die Leitung 11 zum Zweck einer Filtration umgepumpt.

Mit einer solchen Versuchserodieranlage wurden folgende Überprüfungen vorgenommen:

### Beispiel 1

Einer Mischung aus synthetisch hergestellten aliphatischen Kohlenwasserstoffen mit folgenden physikalischen Eigenschaften:

| | | |
|---|---|---|
| Dichte b. 15°C | 0,81 g/cm³ | DIN 51757 |
| kin. Viskosität b. 20°C | 8,8 mm²/s | DIN |
| 51562 | | |
| kin. Viskosität b. 40°C | 5,1 mm²/s | DIN |
| 51562 | | |
| Flammpunkt (COC) | 150 °C | ISO 2592 |
| Aromatengehalt: | < 1,0 Gew.% | |

wurde ein Additiv gemäß Anspruch 3 in verschiedenen Konzentrationen zugemischt. Die Versuche wurden auf einer Kleinerodiermaschine SEM 10 der Walter Klink GmbH, Fellbach, mit einer Werkzeugelektrode aus Graphit und einem Werkstück aus Stahl 56 NiCrMoV 7 bei einer Erodierzeit von einer Stunde durchgeführt.

**Ergebnisse der Versuchsreihe Beispiel 1**

| | | | |
|---|---|---|---|
| Konzentration des Additivs [%]: | 0 | 0,5 | 1,0 |
| Abtrag am Werkstück bei I = 10 A (Grobbearbeitung) [g/h] | 0,79 | 1,05 | 1,07 |
| Abtragssteigerung bei der Grobbearbeitung i. Vgl. zu 0 % Additiv | | 32,9 % | 35,4 % |
| Verschleiß d. Elektrode bei I = 10 A (Grobbearbeitung) [g/h] | 0 | 0 | 0 |
| Abtrag am Werkstück bei 1 = 2 A (Feinbearbeitung) [g/h] | 0,046 | 0,064 | 0,087 |
| Abtragssteigerung bei der Feinbearbeitung i. Vgl. zu 0 % Additiv | | 39,1 % | 89,1 % |
| Verschleiß d. Elektrode bei I = 2 A (Feinbearbeitung) [g/h] | 0,002 | 0,002 | 0,003 |

### Beispiel 2

Einer Mischung aus synthetisch hergestellten aliphatischen Kohlenwasserstoffen mit folgenden physikalischen Eigenschaften:

| | | |
|---|---|---|
| Dichte b. 15° | 0,81 g/cm³ | DIN 51757 |
| kin. Viskosität b. 20°C | 8,8 mm²/s | DIN 51562 |
| kin. Viskosität b. 40°C | 5,1 mm²/s | DIN 51562 |
| Flammpunkt (COC) | 150 °C | ISO 2592 |
| Aromatengehalt: | < 1,0 Gew.% | |

wurde ein Additiv gemäß Anspruch 4 in verschiedenen Konzentrationen zugemischt. Die Versuche wurden auf einer Kleinerodiermaschine SEM 10 der Walter Klink GmbH, Fellbach, mit einer Werkzeugelektrode aus Graphit und einem Werkstück aus Stahl 56 NiCrMoV 7 bei einer Erodierzeit von einer Stunde durchgeführt:

**Ergebnisse der Versuchsreihe 2:**

| | | | |
|---|---|---|---|
| Konzentration des Additivs [%] : | 0 | 0,5 | 1,0 |
| Abtrag am Werkstück bei I = 10 A (Grobbearbeitung) [g/h] | 0,79 | 1,04 | 1,13 |
| Abtragssteigerung bei der Grobbearbeitung i. Vgl. zu 0 % Additiv | | 31,6 % | 43,0 % |
| Verschleiß d. Elektrode bei I = 10 A (Grobbearbeitung) [g/h] | 0 | 0 | 0 |
| Abtrag am Werkstück bei I = 2 A (Feinbearbeitung) [g/h] | 0,046 | 0,063 | 0,072 |
| Abtragssteigerung bei der Feinbearbeitung i. Vgl. zu 0 % Additiv | | 37,0 % | 56,5 % |
| Verschleiß d. Elektrode bei I = 2 A (Feinbearbeitung) [g/h] | 0,002 | 0,003 | 0,004 |

### Beispiel 3

Einer Mischung aus synthetisch hergestellten aliphatischen Kohlenwasserstoffen mit folgenden physikalischen Eigenschaften:

| | | |
|---|---|---|
| Dichte b. 15°C | 0,81 g/cm³ | DIN 51757 |
| kin. Viskosität b. 20°C | 8,8 mm²/s | DIN 51562 |
| kin. Viskosität b. 40°C | 5,1 mm²/s | DIN 51562 |
| Flammpunkt (COC) | 150 °C | ISO 2592 |
| Aromatengehalt: | < 1,0 Gew.% | |

wurde ein Additiv gemäß Ansprüch 5 in verschiedenen Konzentrationen zugemischt. Die Versuche wurden auf einer Kleinerodiermaschine SEM 10 der Walter Klink GmbH, Fellbach, mit einer Werkzeugelektrode aus Graphit und einem Werkstück aus Stahl 56 NiCrMoV 7 bei einer Erodierzeit von einer Stunde durchgeführt:

**Ergebnisse der Versuchsreihe 3**

| | | | | | |
|---|---|---|---|---|---|
| Konzentration des Additivs [%] : | 0 | 0,5 | 1,0 | 2,0 | 9,0 |
| Abtrag am Werkstück bei I = 10 A (Grobbearbeitung) [g/h] | 0,79 | 1,31 | 1,45 | 1,57 | 1,34 |
| Abtragssteigerung bei der Grobbearbeitung i. Vgl. zu 0 % Additiv | | 65,8 % | 83,5 % | 98,7 % | 69,6% |
| Verschleiß d. Elektrode bei I = 10 A (Grobbearbeitung) [g/h] | 0 | 0 | 0 | 0 | 0 |
| Abtrag am Werkstück bei I = 2 A (Feinbearbeitung) [g/h] | 0,046 | 0,088. | 0,112 | 0,090 | 0,086 |
| Abtragssteigerung bei der Feinbearbeitung i. Vgl. zu 0 % Additiv | | 91,3 % | 143,5% | 95,7 % | 87,0% |
| Verschleiß d. Elektrode bei I = 2 A (Feinbearbeitung) [g/h] | 0,002 | 0,003 | 0,004 | 0,002 | 0 |

### Beispiel 4

Einer Mischung aus synthetisch hergestellten n- und iso-Paraffinen mit folgenden physikalischen Eigenschaften:

| | | |
|---|---|---|
| Dichte b. 15°C | 0,79 g/cm³ | DIN 51757 |
| kin. Viskosität b. 20°C | 3,9 mm²/s | DIN 51562 |
| kin. Viskosität b. 40°C | 2,8 mm²/s | DIN 51562 |
| Flammpunkt (PM) | 107°C | DIN EN 22719 |
| Aromatengehalt: | < 0,01 Gew.% | |

welche ein Additiv aus der Gruppe der Anthrachinon-Derivate (gem. P 4132879) enthielt, wurde ein Additiv gemäß Anspruch 5 in verschiedenen Konzentrationen zugemischt. Die Versuche wurden auf einer Kleinerodiermaschine SEM 10 der Walter Klink GmbH, Fellbach, mit einer Werkzeugelektrode aus Kupfer und einem Werkstück aus Stahl 56 NiCrMoV 7 bei einer Erodierzeit von einer Stunde durchgeführt:

**Ergebnisse der Versuchsreihe 4**

| | | | | | |
|---|---|---|---|---|---|
| Konzentration des Additivs [%] : | 0 | 0,05 | 0,1 | 0,2 | 0,3 |
| Abtrag am Werkstück bei I = 10 A (Grobbearbeitung) [g/h] | 2,43 | 2,47 | 2,49 | 2,78 | 2,29 |
| Abtragssteigerung bei der Grobbearbeitung i. Vgl. zu 0 % Additiv | | 1,7 % | 2,5 % | 14,4% | -5,8% |
| Verschleiß d. Elektrode bei I = 10 A (Grobbearbeitung) [g/h] | 0,006 | 0,007 | 0,009 | 0,010 | 0,008 |
| Abtrag am Werkstück bei I = 2 A (Feinbearbeitung) [g/h] | 0,096 | 0,099 | 0,128 | 0,162 | 0,181 |
| Abtragssteigerung bei der Feinbearbeitung i. Vgl. zu 0 % Additiv | | 3,1 % | 33,3% | 68,8% | 88,5% |
| Verschleiß d. Elektrode bei I = 2 A (Feinbearbeitung) [g/h] | 0,001 | 0,001 | 0,002 | 0,002 | 0,002 |

### Beispiel 5

Einer Mischung aus synthetisch hergestellten aliphatischen Kohlenwasserstoffen mit folgenden physikalischen Eigenschaften:

| | | |
|---|---|---|
| Dichte b. 15°C | 0,81 g/cm³ | DIN 51757 |
| kin. Viskosität b. 20°C | 11,2 mm²/s | DIN 51562 |
| kin. Viskosität b. 40°C | 6,0 mm²/s | DIN 51562 |
| Flammpunkt (PM) | 160 °C | DIN EN 22719 |
| Aromatengehalt: | < 0,5 Gew.% | |

welche ein Additiv aus der Gruppe der Anthrachinon-Derivate (gem. P 4132879) enthielt, wurde ein Additiv gemäß Anspruch 5 in einer Konzentration von 0,2 Gew.% zugemischt. Im Versuch wurde die funkenerosive Bearbeitung eines PKD-beschichteten Werkzeuges auf einer Erodiermaschine (Helitronic Power mit EDM-Generator) der Firma Walter-Exeron, Fluorn-Winzeln, wobei das Dielektrikum mit Hilfe zweier Spüldüsen über Elektrode und Werkstück geleitet wird, durchgeführt:

Durch Zugabe von 0,2 Gew.% des Additivs gemäß Anspruch 5 konnte die zur Bearbeitung benötigte Zeit um ca. 23 % reduziert werden. Der EDM-Prozeß verlief nach subjektiver Beurteilung der Arbeitsgeräusche wesentlich stabiler, d.h. mit einer deutlich geringeren Anzahl von nicht erfolgten Zündungen ab.

Bei Additiv konzentrationen kleiner als 0,1 % dürften keine Verbesserungen auftreten. Bei Konzentrationen über 10 % ist die Funktionsfähigkeit ebenfalls in Frage gestellt.

### Beispiel 6

Bearbeitung eines Werkzeuges aus Hochleistungsschnellstahl (HSS) mit einer CBN-Schleifscheibe auf einer Schleifmaschine (Helitronic Power "Regrinder") der Firma Walter AG, Tübingen. Der Vorschub der Schleifscheibe betrug 80 mm/Min.
- Ohne Zugabe des Additivs gemäß Anspruch 1 betrug die tangentiale Leistungsaufnahme der Maschine 50%, die Werkstückoberfläche verfärbte sich aufgrund der thermischen Überbelastung des Materials.
- Nach Zugabe von 0,2 Gew.% des Additivs reduzierte sich die tangentiale Leistungsaufnahme um 30 %, die Werkstückoberfläche zeigte keine Verfärbungen infolge von thermischer Überbelastung.

### Beispiel 7

Bearbeitung eines Hartmetallwerkzeuges mit einer Diamantschleifscheibe mit einem Vorschub von 80 mm/Min. auf einer Schleifmaschine (Helitronic Power "Regrinder") der Firma Walter AG, Tübingen:
- Durch Zugabe von 0,2 Gew.% des Additivs gemäß Anspruch 1 konnte die tangentiale Leistungsaufnahme der Maschine um ca. 13 % reduziert werden.

## Patentansprüche

1. Verwendung einer Flüssigkeit, die als Hauptkomponente gesättigte aliphatische, acyclische Kohlenwasserstoffe mit einem Anteil an aromatischen Kohlenwasserstoffen kleiner als ein Gewichtsprozent enthält und der als Additiv organische Schwefelverbindungen in einer Konzentration von mindestens 0,01 Gewichtsprozent und maximal 10 Gewichtsprozent beigegeben sind, in welchen mindestens zwei Schwefelatome im Molekül miteinander verbunden sind, die im Molekül entweder keine Ladung oder eine negative Partialladung aufweisen, als Dielektrikum für die Metallbearbeitung mittels Funkenerosion, wobei die organischen Schwefelverbindungen keine cyclischen Kohlenwasserstoffreste mit konjugierten Doppelbindungen enthalten.

2. Verwendung nach Anspruch 1, **dadurch gekennzeichnet, daß** die organischen Schwefelverbindungen aufgebaut sind aus zwei oder mehr verzweigten oder unverzweigten Ketten von Kohlenwasserstoffen oder Carbonsäureestern, welche durch eine oder mehrere unverzweigte Ketten von zwei bis zehn, bevorzugt zwei bis fünf Schwefelatomen miteinander verbunden sind.

3. Verwendung nach Anspruch 1 oder 2, **dadurch gekennzeichnet, daß** alle durch Schwefelatome verbundene Ketten sämtlich aus aliphatischen, verzweigten oder unverzweigten oder cyclischen Kohlenwasserstoffen entsprechend (I) bestehen:

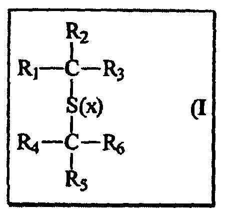

4. Verwendung nach Anspruch 1 oder 2, **dadurch gekennzeichnet, daß** alle durch Schwefelatome verbundene Ketten aus Carbonsäureestern (d.h. Kondensationsprodukten aus einer oder mehreren ein- oder mehrwertigen Carbonsäuren mit einem oder mehreren ein- oder mehrwertigen Alkoholen) entsprechend (II) bestehen:

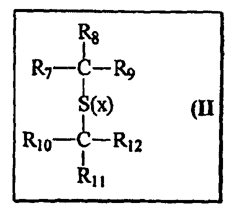

5. Verwendung nach Anspruch 1 oder 2, **dadurch gekennzeichnet, daß** alle durch Schwefelatome verbunden Ketten teilweise aus den o.g. Kohlenwasserstoffen und aus den o.g. Carbonsäurestern sowie Carbonsäuren entsprechend (III) bestehen:

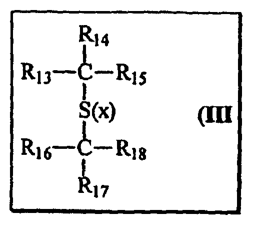

6. Verwendung nach Anspruch 3, **dadurch gekennzeichnet, daß** R₁ und R₄, welche identisch oder unterschiedlich sein können, Alkylgruppen repräsentieren, welche geradkettig oder verzweigt sein können und ein bis sechzehn Kohlenstoffatome enthalten.

7. Verwendung nach Anspruch 3 oder Anspruch 6, **dadurch gekennzeichnet, daß** R₂, R₃, R₅ und R₆, welche identisch oder unterschiedlich sein können, Wasserstoffatome oder Alkylgruppen repräsentieren, welche geradkettig oder verzweigt sein können und ein bis achtzehn Kohlenstoffatome enthalten.

8. Verwendung nach Anspruch 6 oder 7, **dadurch gekennzeichnet, daß** die Anzahl der Schwefelatome je Kette x = 2 - 10, bevorzugt 2 - 5 Atome beträgt.

9. Verwendung nach Anspruch 4, **dadurch gekennzeichnet, daß** R₇ und R₁₀, welche identisch oder unterschiedlich sein können, Carbonsäureestergruppen repräsentieren, welche zusammengesetzt sein können aus einer oder mehreren ein- oder mehrwertigen Carbonsäuren, enthaltend zwei bis zwanzig Kohlenstoffatome, kondensiert mit einem oder mehreren ein- oder mehrwertigen Alkoholen.

10. Verwendung nach Anspruch 4 oder Anspruch 9, **dadurch gekennzeichnet, daß** R₈, R₉, R₁₁ und R₁₂, welche identisch oder unterschiedlich sein können, Wasserstoffatome oder Alkylgruppen repräsentieren, welche geradkettig oder verzweigt sein können und ein bis sechzehn Kohlenstoffatome enthalten oder ebenfalls Carbonsäureestergruppen.

11. Verwendung nach Anspruch 9 oder 10, **dadurch gekennzeichnet, daß** die Anzahl der Schwefelatome je Kette x = 2 - 10, bevorzugt 2 - 5 Atome beträgt.

12. Verwendung nach Anspruch 5, **dadurch gekennzeichnet, daß** R₁₃ eine Alkylgruppe repräsentiert, welche geradkettig oder verzweigt sein kann und ein bis sechzehn Kohlenstoffatome enthält.

13. Verwendung nach Anspruch 5 oder Anspruch 12, **dadurch gekennzeichnet, daß** R₁₆ eine Carbonsäureestergruppe repräsentiert, welche zusammengesetzt sein kann aus einer oder mehreren ein- oder mehrwertigen Carbonsäuren, enthaltend zwei bis zwanzig Kohlenstoffatome, kondensiert mit einem oder mehreren ein- oder mehrwertigen Alkohlen.

14. Verwendung nach einem der Ansprüche 5, 12 oder 13, **dadurch gekennzeichnet, daß** R₁₄ und R₁₅, welche identisch oder unterschiedlich sein können, Wasserstoffatome oder Alkylgruppen repräsentieren, welche geradkettig oder verzweigt sein können können und ein bis sechzehn Kohlenstoffatome enthalten oder Carbonsäuren, welche geradkettig oder verzweigt sein können und zwei bis zwanzig Kohlenstoffatome enthalten können.

15. Verwendung nach einem der Ansprüche 5, 12, 13 oder 14, **dadurch gekennzeichnet, daß** R₁₇ und R₁₈, welche identisch oder unterschiedlich sein können, Wasserstoffatome oder Alkylgruppen repräsentieren, welche geradkettig oder verzweigt sein können und ein bis sechzehn Kohlenstoffatome enthalten oder ebenfalls Carbonsäureestergruppen, welche zusammengesetzt sein können aus einer oder mehreren ein- oder mehrwertigen Carbonsäuren, enthaltend zwei bis zwanzig Kohlenstoffatome, kondensiert mit mit einem oder mehreren ein- oder mehrwertigen Alkoholen, oder Carbonsäuren, welche geradkettig oder verzweigt sein können und zwei bis zwanzig Kohlenstoffatome enthalten können.

16. Verwendung nach einem der Ansprüche 12 bis 15, **dadurch gekennzeichnet, daß** die Anzahl der Schwefelatome je Kette x = 2 - 10, bevorzugt 2 - 5 Atome beträgt.

17. Verwendung nach einem der vorhergehenden Ansprüche, **dadurch gekennzeichnet, daß** die dielektrische Flüssigkeit zusätzlich noch ein zweites Additiv aus der Gruppe der Anthrachinon-Derivate enthält.

## Claims

1. Use of a liquid which comprises saturated aliphatic, acyclic hydrocarbons having a proportion of aromatic hydrocarbons of less than one per cent by weight as main component and to which organic sulphur compounds in which at least two sulphur atoms in the molecule are joined to one another and which have either no charge or a partial negative charge in the molecule have been added as additive in a concentration of at least 0.01 per cent by weight and not more than 10 per cent by weight as dielectric for metal forming by means of spark erosion, with the organic sulphur compounds containing no cyclic hydrocarbon residues having conjugated double bonds.

2. Use according to Claim 1, **characterized in that** the organic sulphur compounds are made up of two or more branched or unbranched chains of hydrocarbons or carboxylic esters which are joined to one another by one or more unbranched chains of from two to ten, preferably from two to five, sulphur atoms.

3. Use according to Claim 1 or 2, **characterized in that** all chains joined by sulphur atoms consist entirely of aliphatic, branched or unbranched or cyclic hydrocarbons corresponding to (I):

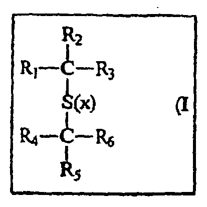

4. Use according to Claim 1 or 2, **characterized in that** all chains joined by sulphur atoms consist of carboxylic esters (i.e. condensation products of one or more monofunctional or polyfunctional carboxylic acids with one or more monofunctional or polyfunctional alcohols) corresponding to (II):

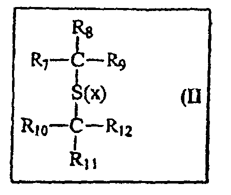

5. Use according to Claim 1 or 2, **characterized in that** all chains joined by sulphur atoms consist partly of the abovementioned hydrocarbons and partly of the abovementioned carboxylic esters and carboxylic acids corresponding to (III):

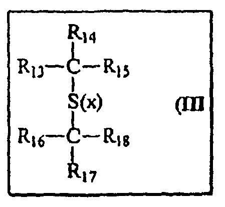

6. Use according to Claim 3, **characterized in that** R₁ and R₄, which can be identical or different, represent alkyl groups which can be linear or branched and contain from one to sixteen carbon atoms.

7. Use according to Claim 3 or Claim 6, **characterized in that** R₂, R₃, R₅ and R₆, which can be identical or different, represent hydrogen atoms or alkyl groups which can be linear or branched and contain from one to eighteen carbon atoms.

8. Use according to Claim 6 or 7, **characterized in that** the number of sulphur atoms per chain x = 2 - 10 atoms, preferably 2 - 5 atoms.

9. Use according to Claim 4, **characterized in that** R₇ and R₁₀, which can be identical or different, represent carboxylic ester groups which can be composed of one or more monofunctional or polyfunctional carboxylic acids containing from two to twenty carbon atoms condensed with one or more monofunctional or polyfunctional alcohols.

10. Use according to Claim 4 or Claim 9, **characterized in that** R₈, R₉, R₁₁ and R₁₂, which can be identical or different, represent hydrogen atoms or alkyl groups which can be linear or branched and contain from one to sixteen carbon atoms or likewise carboxylic ester groups.

11. Use according to Claim 9 or 10, **characterized in that** the number of sulphur atoms per chain x = 2 - 10 atoms, preferably 2 - 5 atoms.

12. Use according to Claim 5, **characterized in that** R₁₃ represents an alkyl group which can be linear or branched and contains from one to sixteen carbon atoms.

13. Use according to Claim 5 or Claim 12, **characterized in that** R₁₆ represents a carboxylic ester group which can be composed of one or more monofunctional or polyfunctional carboxylic acids containing from two to twenty carbon atoms condensed with one or more monofunctional or polyfunctional alcohols.

14. Use according to any of Claims 5, 12 and 13, **characterized in that** R₁₄ and R₁₅, which can be identical or different, represent hydrogen atoms or alkyl groups which can be linear or branched and contain from one to sixteen carbon atoms or carboxylic acids which can be linear or branched and can contain from two to twenty carbon atoms.

15. Use according to any of Claims 5, 12, 13 and 14, **characterized in that** R₁₇ and R₁₈, which can be identical or different, represent hydrogen atoms or alkyl groups which can be linear or branched and contain from one to sixteen carbon atoms or likewise carboxylic ester groups which can be composed of one or more monofunctional or polyfunctional carboxylic acids containing from two to twenty carbon atoms condensed with one or more monofunctional or polyfunctional alcohols, or carboxylic acids which can be linear or branched and can contain from two to twenty carbon atoms.

16. Use according to any of Claims 12 to 15, **characterized in that** the number of sulphur atoms per chain x = 2 - 10 atoms, preferably 2 - 5 atoms.

17. Use according to any of the preceding claims, **characterized in that** the dielectric liquid additionally contains a second additive from the group of anthraquinone derivatives.

## Revendications

1. Utilisation d'un liquide qui contient comme composant principal des hydrocarbures saturés, aliphatiques, acycliques, contentant une proportion d'hydrocarbures aromatiques inférieure à 1% en poids, et auquel on a ajouté, comme additif, des composés soufrés organiques en une concentration d'au moins 0,01% en poids et d'au maximum 10% en poids, dans lesquels au moins deux atomes de soufre sont liés l'un à l'autre dans la molécule, qui ne présentent pas de charge ou qui présentent une charge partielle négative dans la molécule, comme diélectrique pour l'usinage de métaux par une érosion par étincelles, les composés soufrés organiques ne contenant pas de restes hydrocarbonés cycliques avec des doubles liaisons conjuguées.

2. Utilisation selon la revendication 1, **caractérisée en ce que** les composés organiques soufrés sont constitués par deux ou plus de deux chaînes ramifiées ou non ramifiées d'hydrocarbures ou d'esters d'acide carboxylique qui sont liées l'une à l'autre par une ou plusieurs chaînes non ramifiées constituées par deux à dix, de préférence deux à cinq atomes de soufre.

3. Utilisation selon la revendication 1 ou 2, **caractérisée en ce que** toutes les chaînes reliées par des atomes de soufre sont constituées globalement par des hydrocarbures aliphatiques, ramifiés ou non ramifiés ou cycliques selon (I) :

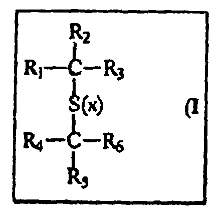

4. Utilisation selon la revendication 1 ou 2, **caractérisée en ce que** toutes les chaînes reliées par des atomes de soufre sont constituées par des esters d'acide carboxylique (c'est-à-dire des produits de condensation d'un ou de plusieurs acides carboxyliques monovalents ou polyvalents avec un ou plusieurs alcools monovalents ou polyvalents) selon II :

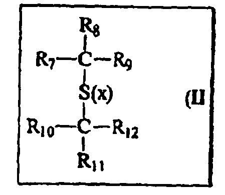

5. Utilisation selon la revendication 1 ou 2, **caractérisée en ce que** toutes les chaînes reliées par des atomes de soufre sont constituées partiellement par les hydrocarbures susmentionnés et par les esters d'acide carboxylique susmentionnés ainsi que par les acides carboxyliques selon (III) :

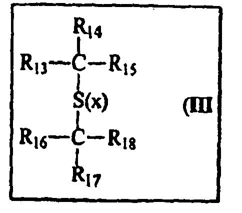

6. Utilisation selon la revendication 3, **caractérisée en ce que** R₁ et R₄, qui peuvent être identiques ou différents, représentent des groupes alkyle qui peuvent être linéaires ou ramifiés et qui comprennent un à seize atomes de carbone.

7. Utilisation selon la revendication 3 ou la revendication 6, **caractérisée en ce que** R₂, R₃, R₅ et R₆, qui peuvent être identiques ou différents, représentent des atomes d'hydrogène ou des groupes alkyle, qui peuvent être linéaires ou ramifiés et qui comprennent un à dix-huit atomes de carbone.

8. Utilisation selon la revendication 6 ou 7, **caractérisée en ce que** le nombre d'atomes de soufre par chaîne x = 2 à 10, de préférence 2 à 5 atomes.

9. Utilisation selon la revendication 4, **caractérisée en ce que** R₇ et R₁₀, qui peuvent être identiques ou différents, représentent des groupes ester d'acide carboxylique, qui peuvent être constitués par un ou plusieurs acides carboxyliques monovalents ou polyvalents comprenant deux à vingt atomes de carbone, condensés avec un ou plusieurs alcools monovalents ou polyvalents.

10. Utilisation selon la revendication 4 ou la revendication 9, **caractérisée en ce que** R₈, R₉, R₁₁ et R₁₂, qui peuvent être identiques ou différents, représentent des atomes d'hydrogène ou des groupes alkyle, qui peuvent être linéaires ou ramifiés et qui comprennent un à seize atomes de carbone ou également des groupes ester d'acide carboxylique.

11. Utilisation selon la revendication 9 ou 10, **caractérisée en ce que** le nombre d'atomes de soufre par chaîne x = 2 à 10, de préférence 2 à 5 atomes.

12. Utilisation selon la revendication 5, **caractérisée en ce que** R₁₃ représente un groupe alkyle qui peut être linéaire ou ramifié et qui comprend un à seize atomes de carbone.

13. Utilisation selon la revendication 5 ou la revendication 12, **caractérisée en ce que** R₁₆ représente un groupe ester d'acide carboxylique, qui peut être constitué par un ou plusieurs acides carboxyliques monovalents ou polyvalents, comprenant deux à vingt atomes de carbone condensés avec un ou plusieurs alcools monovalents ou polyvalents.

14. Utilisation selon l'une quelconque des revendications 5, 12 ou 13, **caractérisée en ce que** R₁₄ et R₁₅, qui peuvent être identiques ou différents, représentent des atomes d'hydrogène ou des groupes alkyle, qui peuvent être linéaires ou ramifiés et qui comprennent un à seize atomes de carbone ou des acides carboxyliques qui peuvent être linéaires ou ramifiés et qui peuvent comprendre deux à vingt atomes de carbone.

15. Utilisation selon l'une quelconque des revendications 5, 12, 13 ou 14, **caractérisée en ce que** R₁₇ et R₁₈, qui peuvent être identiques ou différents, représentent des atomes d'hydrogène ou des groupes alkyle, qui peuvent être linéaires ou ramifiés et qui comprennent un à seize atomes de carbone ou également des groupes ester d'acide carboxylique, qui peuvent être constitués par un ou plusieurs acides carboxyliques monovalents ou polyvalents, comprenant deux à vingt atomes de carbone, condensés avec un ou plusieurs alcools monovalents ou polyvalents, ou des acides carboxyliques qui peuvent être linéaires ou ramifiés et qui peuvent comprendre deux à vingt atomes de carbone.

16. Utilisation selon l'une quelconque des revendications 12 à 15, **caractérisée en ce que** le nombre d'atomes de soufre par chaîne x = 2 à 10, de préférence 2 à 5 atomes.

17. Utilisation selon l'une quelconque des revendications précédentes, **caractérisée en ce que** le liquide diélectrique contient en outre encore un deuxième additif du groupe des dérivés de l'anthraquinone.
